# EUROPÄISCHE PATENTSCHRIFT

(11) **EP 2 048 493 B1**
(45) Veröffentlichungstag und Bekanntmachung des Hinweises auf die Patenterteilung: **30.06.2010**
(21) Anmeldenummer: 08166063.1
(22) Anmeldetag: 08.10.2008
(51) Int. Cl.: G01N 21/88, B07C 3/14, G06K 9/20

(54) **Verfahren und Vorrichtung zur automatischen Prüfung, ob ein Gegenstand von einer Folie bedeckt ist**
Method and device for automatic checking of whether an item is covered in a film.
Procédé et dispositif destinés à la vérification automatique pour savoir si un objet est revêtu d'un film

(30) Priorität: 08.10.2007 DE 102007048163
(43) Veröffentlichungstag der Anmeldung: 15.04.2009
(73) Patentinhaber: Siemens Aktiengesellschaft, 80333 München (DE)
(72) Erfinder: Keil, Göran, 12529, Schönefeld (DE)

(56) Entgegenhaltungen:
- JP-A- 8 306 284
- JP-A- 56 129 985
- JP-A- 2002 174 598
- JP-A- 2002 228 592
- JP-A- 2003 108 920
- JP-A- 2007 221 491
- US-A- 4 158 835
- US-B1- 6 314 193

## Beschreibung

Die Erfindung betrifft ein Verfahren und eine Vorrichtung zur automatischen Prüfung, ob ein Gegenstand einen Teilbereich aufweist, der von einer Folie bedeckt ist, oder nicht.

Bei der Verarbeitung von Gegenständen sind folienverpackte Gegenstände oft anders zu behandeln als nicht folienverpackte Gegenstände. Um einen folienverpackten Gegenstand zu beschriften, ist eine spezielle Tinte oder Druckfarbe zu verwenden. Oder die Informationen, mit denen der Gegenstand zu beschriften ist, ist auf ein Etikett anzubringen, und das Etikett ist auf den Gegenstand zu kleben. Ein nicht folienverpackter Gegenstand lässt sich hingegen mit üblicher Tinte oder Druckfarbe beschriften. Auch ein Gegenstand, der einen Bereich aufweist, der von einer Folie bedeckt ist, erfordert häufig eine Sonderbehandlung, z. B. wenn hinter dem bedeckten Bereich eine Zieladresse aufgedruckt ist, die automatisch gelesen werden soll. Beim automatischen Lesen (OCR) ist die Wirkung der Folie herauszurechnen.

Die Gegenstände sind beispielsweise Postsendungen, die in einem Strom von Gegenständen nacheinander eine Sortieranlage durchlaufen. In dieser Anwendung ist nicht vorab bekannt, welche der Postsendungen folienverpackt sind und welche nicht.

Häufig sind auch Gegenstände mit einer Folie anders zu transportieren als andere. Beispielsweise ist eine folienverpackte Postsendung anders von einer Transportstrecke einer Sortieranlage zu transportieren oder auszuschleusen, weil ihre Oberfläche einen anderen Reibungskoeffizienten aufweist als eine Postsendung ohne Folie.

Aus US 4,845,761 sind ein Verfahren mit den Merkmalen des Oberbegriffs des Anspruchs 1 und eine Vorrichtung mit den Merkmalen des Oberbegriffs des Anspruchs 18 bekannt. In US 4,845,761 werden ein Verfahren und eine Vorrichtung beschrieben, bei der eine Postsendung in schrägem Winkel mit einem Lichtstrahl bestrahlt wird. Die Reflexion des Lichtstahls wird von einem flächigen Lichtsensor mit mehreren Photodetektoren gemessen. Jeder Photodetektor liefert ein Ausgangssignal proportional zur Intensität des auftreffenden reflektieren Lichtstrahls. Die Intensitäten werden ausgewertet, um ein Fenster einer Postsendung zu entdecken.

Die in US 4,845,761 beschriebene Vorrichtung erfordert eine aufwendige Auswerteschaltung. Die gemessene Intensität kann stark von den Reflexionseigenschaften der Folie abhängen, die oft weder bekannt sind noch für die weitere Verarbeitung bekannt zu sein brauchen.

In JP 2007/221491 A werden eine Vorrichtung und ein Verfahren beschrieben, um das Vorhandensein oder Nichtvorhandensein eines Gegenstands festzustellen. Der Gegenstand wird im Ausführungsbeispiel unter einer Messvorrichtung mit Lichtquelle und Sensor vorbeitransportiert. Der Sensor ist als CCD-Zeilensensor ausgestaltet und misst die Stärke des vom Gegenstand reflektierten Lichts. Diese Stärke wird mit einem Schwellwert verglichen. Ist der Gegenstand von einer Folie bedeckt, so kann eine graphische Darstellung der gemessenen Stärke mehrere lokale Maxima aufweisen.

In DE 19801246 A1 werden ein Verfahren und eine Vorrichtung beschrieben, die Folien und Fensterbereiche auf Postsendungen entdecken und lokalisieren. Die Postsendung wird an einer Anordnung von Beleuchtungselementen vorbeigeführt, z. B. an einer Leiste mit zwei Zeilen von je 25 bis 50 Elemente, die einen Abstand von ca. 0,5 bis 1 cm zueinander haben. Zu einem bestimmten Zeitpunkt wird nur jeweils ein Beleuchtungselement aktiviert. Das reflektierte Licht bildet einen Streukegel, dessen Durchmesser größer als der Abstand der Elemente ist. Auf der Postsendung wird ein Abtastbereich überstrichen. Vorzugsweise senden die Beleuchtungselemente Laserlicht aus, also polarisierendes Licht. Aus der Differenz zweier benachbarter Laserdioden lässt sich Folie von Papier unterscheiden.

In DE 1247052 A wird vorgeschlagen, die Glanzeigenschaften auf zwei Messflächen zu messen. Diese Messflächen befinden sich an verschiedenen Stellen auf der Oberfläche der Postsendung. Wird eine signifikante Abweichung entdeckt, so wird gefolgert, dass die Postsendung ein Klarsichtfenster oder einen mit einer Folie bedeckten Teil aufweist.

In WO 2005/048171 A1 wird beschrieben, wie eine Zeilenkamera einen Gegenstand abtastet, der mit bekannter Geschwindigkeit relativ zur Kamera bewegt wird. Das Abtasten wird so durchgeführt, dass es ein lineares Bild liefert, das senkrecht auf der Bewegungsrichtung steht. Der Gegenstand wird von zwei Seiten beleuchtet.

In US 5,841,881 werden ein Verfahren und eine Vorrichtung beschrieben, um ein Sichtfenster oder ein Etikett ("label") auf einem Gegenstand zu entdecken. Der Gegenstand wird an einer Zeilenkamera vorbeigeführt und beleuchtet. Die vom Gegenstand bewirkten Reflektionen werden mittels eines photoelektrischen Sensors und einer Verarbeitungseinheit in ein Binärbild umgewandelt. Durch Auswertung des Binärbildes wird die Lage des Sichtfensters / Etiketts entdeckt.

Verfahren und Vorrichtungen, um die Oberfläche von Gegenständen zu untersuchen, sind auch aus DE 10239548 A1, US 4,158,835, US 6,314,193 B1, GB 2405247 A und WO 2005/122099 A2 bekannt.

Der Erfindung liegt die Aufgabe zugrunde, ein Verfahren mit den Merkmalen des Oberbegriffs des Anspruchs 1 und eine Vorrichtung mit den Merkmalen des Oberbegriffs des Anspruchs 18 bereitzustellen, die automatisch prüfen, ob ein Gegenstand einen Teilbereich aufweist, der von einer Folie bedeckt ist, oder nicht, ohne dass es erforderlich ist, die Intensität eines vom Gegenstand reflektierten Lichtstrahls zu messen.

Die Aufgabe wird durch ein Verfahren mit den Merkmalen des Anspruchs 1 und eine Vorrichtung mit den Merkmalen des Anspruchs 18 gelöst. Vorteilhafte Ausgestaltungen sind in den Unteransprüchen angegeben.

Beim erfindungsgemäßen Verfahren wird geprüft, ob ein Gegenstand einen Teilbereich aufweist, der von einer Folie bedeckt ist, oder nicht. Ein Lichtsensor mit mehreren Photodetektoren wird verwendet.

Das Verfahren umfasst folgende Schritte:
- Ein gebündelter Lichtstrahl wird erzeugt.
- Der Lichtstrahl wird auf die Oberfläche des zu untersuchenden Gegenstands gerichtet.
- Der Lichtstrahl wird dergestalt auf den Gegenstand gerichtet, dass folgendes passiert: Zwischen dem Lichtstrahl und einer Senkrechten auf der Oberfläche des Gegenstands in dem Punkt, in dem der Lichtstrahl die Oberfläche des Gegenstands trifft, tritt ein Winkel größer Null auf.
- Die vom Gegenstand bewirkte Reflexion des Lichtstrahls wird auf den Lichtsensor geführt.
- Die Photodetektoren des Lichtsensors generieren abhängig von auftreffendem Licht Ausgangssignale.
- Die Ausgangssignale werden ausgewertet.
- Die Auswertung umfasst die Prüfung, ob die Reflexion in nur einem Gebiet oder in mindestens zwei räumlich voneinander getrennten Gebieten auf den Lichtsensor trifft.
- Dann, wenn die Reflexion in zwei getrennten Gebieten auf den Lichtsensor trifft, wird entschieden, dass der Gegenstand einen von einer Folie bedeckten Teilbereich aufweist.

Die Erfindung nutzt den Effekt aus, dass bei der Durchleuchtung der Folie sowohl an der Oberfläche der Folie als auch an der Oberfläche des Gegenstands das auftreffende Licht reflektiert wird. Der Lichtstrahl wird dergestalt auf den Lichtsensor geführt, dass ein Winkel größer Null zwischen dem Lichtstrahl und einer Senkrechten auf der Oberfläche des Gegenstands in dem Punkt, in dem der Lichtstrahl die Oberfläche des Gegenstands trifft, auftritt.

In der Regel liegt die Folie zumindest in einem Teilbereich nicht dicht am Gegenstand an. Daher bilden sich die Reflexionsstellen als Bildpunkte einer Linie auf dem Lichtsensor ab. Wird mehr als ein Bildpunkt erkannt, so wird automatisch auf die Anwesenheit einer Folie geschlossen.

Die Erfindung spart die Notwendigkeit ein, die Intensität des gebündelten und reflektierten Lichtstrahls zu messen, um das Vorhandensein einer Folie zu ermitteln. Diese Intensität hängt auch von den Eigenschaften der Folie ab, die z. B. im Falle eines gemischten Stroms von Postsendungen nicht vorhergesagt werden kann. Außerdem kann es eine aufwendige Sensorik erfordern, um die Lichtintensität zu messen, und eine aufwendige Auswerteschaltung, um aufgrund der Lichtintensität zu entscheiden, ob der Gegenstand einen Teilbereich mit einer Folie aufweist oder nicht. Die Erfindung spart eine derartige Auswertelogik ein.

Die Erfindung lässt sich in gleicher Weise für glänzende wie auch für matte Folien anwenden. Nicht erforderlich ist, dass Eigenschaften der zu entdeckenden Folie oder der Gegenstands-Oberfläche vorab bekannt sind oder vorab gemessen werden. Ein Verfahren, welches die Intensität des reflektierten Lichtstrahls misst, müsste hingegen an glänzende und an matte Folien separat adaptiert werden.

Bevorzugt wird die Prüfung zu mehreren Zeitpunkten und/oder an mehreren Stellen durchgeführt. Dadurch wird es ermöglicht, die Abmessungen des Teilbereichs, der von einer Folie bedeckt ist, zu ermitteln.

Im Folgenden wird die Erfindung anhand eines Ausführungsbeispiels beschrieben. Dabei zeigen
- Fig. 1: eine Anordnung zum Durchführen des Ausführungsbei- spiels;
- Fig. 2: die sechs Punkte, an denen die Lichtstrahlen, die die Anordnung aussendet, auf eine Postsendung mit Sichtfenster treffen;
- Fig. 3: die sechs Punkte, an denen die Lichtstrahlen, die die Anordnung aussendet, auf eine Postsendung ohne Sichtfenster treffen.

Im Ausführungsbeispiel ist der Gegenstand, der zu untersuchen ist, eine flache Postsendung, z. B. ein Standardbrief, ein Großbrief, eine Postkarte oder ein Katalog. Diese Postsendung durchläuft als Teil eines Stroms von Postsendungen eine Sortieranlage. Die Postsendung soll in vielen Anwendungen mit einem Strichcode bedruckt werden, der die erkannte Zieladresse oder eine eindeutige Kennung für die Postsendung codiert. Außerdem soll oft eine Briefmarke entwertet werden oder die Postsendung mit sonst einem Aufdruck versehen werden. Weiterhin soll durch eine automatische Zeichenerkennung (OCR) die Adresse erkannt werden.

Für jede dieser Aufgaben sind drei Arten von Postsendungen zu unterscheiden:
- Postsendungen, die vollständig von einer Folie umhüllt sind,
- Postsendungen mit einem Sichtfenster, das eine Folie aufweist, und
- sonstige Postsendungen.

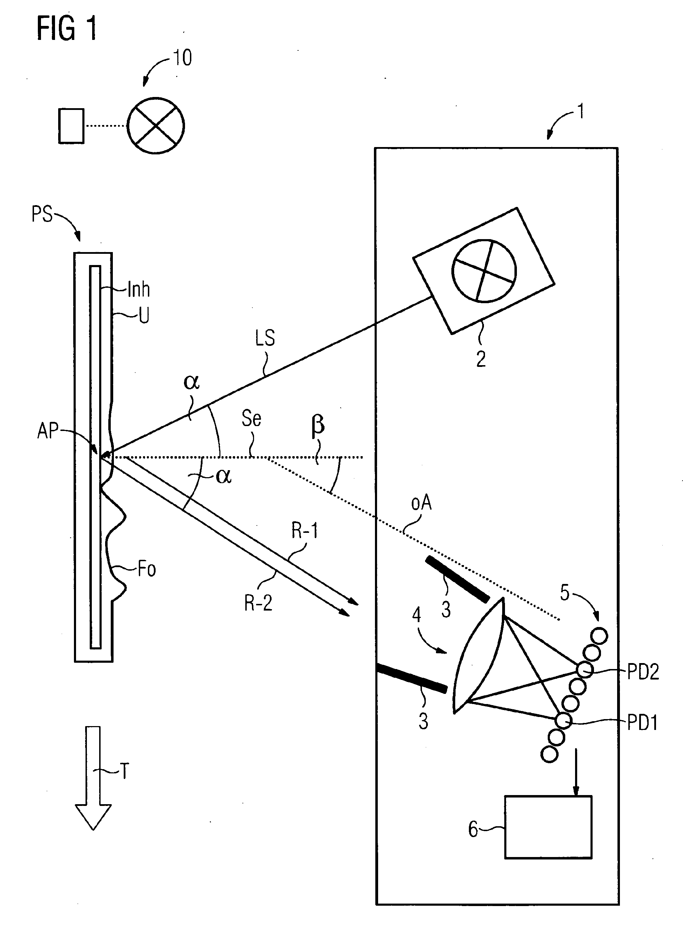

Fig. 1 zeigt eine Anordnung zum Ausführen des Ausführungsbeispiels von oben. In Fig. 1 ist eine Postsendung Ps mit einem Umschlag U, einem inliegenden Inhalt I sowie einem Sichtfenster zu sehen. In das Sichtfenster ist eine Folie Fo eingelassen. Diese Folie Fo ist fest mit dem Umschlag U verbunden. Die Folie Fo im Sichtfenster ist leicht gekräuselt. Dies wird in Fig. 1 übertrieben dargestellt. Auch der Abstand zwischen dem Sichtfenster und dem Inhalt I ist übertrieben dargestellt.

Fig. 1 zeigt weiterhin eine Lichtschranke 10 sowie eine Anordnung 1 zum Durchführen des erfindungsgemäßen Verfahrens. Die Anordnung 1 umfasst folgende Bestandteile:
- eine Lichtquelle 2,
- einen Spiegel 3,
- eine Linse 4,
- eine Zeile 5 mit mehreren Photodetektoren und
- eine Auswerteeinrichtung 6.

Die Lichtquelle 2 ist dazu ausgestaltet, einen fokussierten Lichtstrahl LS auszusenden, welcher auf die zu untersuchende Postsendung Ps trifft. Vorzugsweise erzeugt die Lichtquelle 2 einen Lichtstrahl in Form eines Laserstrahls. Der Spiegel 3 und die Linse 4 richten die Reflexion des Lichtstrahls LS auf die Zeile 5 mit vielen Photodetektoren. Die Zeile 5 mit den Photodetektoren ist vorzugsweise als CCD-Zeilen-Sensor ausgestaltet. Die Photodetektoren des Lichtsensors 5 sind in einer Ebene angeordnet, die senkrecht auf der Zeichenebene von Fig. 1 steht. Die optischen Achsen dieser Photodetektoren verlaufen vorzugsweise parallel. Möglich ist aber auch, dass die Photodetektoren z. B. in einer gekrümmten Fläche angeordnet sind.

Die Auswerteeinrichtung 6 ist vorzugsweise als Prozessor ausgestaltet, auf dem ein Softwareprogramm abläuft, welches die Verfahrensschritte zum Auswerten ausführt, die im Folgenden beschrieben werden.

Die Postsendungen durchlaufen in einer Abfolge aufeinanderfolgender Gegenstände die Sortieranlage und werden hierbei nacheinander über eine Transportstrecke in eine Transportrichtung T geführt. Die Transportgeschwindigkeit, mit der sie über die Transportstrecke geführt werden, ist konstant und bekannt.

Zunächst passiert jede zu untersuchende Postsendung Ps die Lichtschranke 10. Eine Messeinrichtung der Lichtschranke 10 registriert, wann die Vorderkante und wann die Hinterkante einer Postsendung Ps die Lichtschranke 10 passiert. Weil diese beiden Zeitpunkte gemessen werden und die Transportgeschwindigkeit bekannt ist, lässt sich berechnen, wann die Vorderkante und wann die Hinterkante welche Stelle der Transportstrecke erreicht.

Die Lichtquelle 2 erzeugt einen fokussierten Lichtstrahl LS. Dieser trifft auf die Postsendung Ps auf, während diese an der Lichtquelle 2 vorbei in die Transportrichtung T transportiert wird.

In Fig. 1 wird weiterhin eine Senkrechte Se gezeigt. Diese Senkrechte Se steht senkrecht auf der Oberfläche der Postsendung Ps in dem Auftreffenspunkt AP, in dem der Lichtstrahl LS auf die Postsendung Ps auftrifft (genauer: auf den Inhalt I). Die Lichtquelle 2 richtet den fokussierten Lichtstrahl LS so auf die Postsendung Ps, dass zwischen der Senkrechten Se und dem Lichtstrahl LS ein Einfallswinkel α größer Null auftritt. Vorzugsweise liegt dieser Einfallswinkel α zwischen 20 Grad und 40 Grad.

Der Lichtstrahl LS trifft zunächst auf die Folie Fo im Sichtfenster auf. Die Folie Fo im Sichtfenster reflektiert einen Teil des auftreffenden Lichts und lässt einen größeren Teil passieren. Dadurch ruft die Folie Fo eine Reflexion R-1 des Lichtstrahls LS hervor. Derjenige Teil des Lichtstrahls LS, der die Folie Fo durchdringt, trifft anschließend auf den Inhalt I auf. Dieser Inhalt I reflektiert im Ausführungsbeispiel den verbleibenden Teil des Lichtstrahls LS vollständig und ruft dadurch eine Reflexion R-2 hervor.

Die beiden durch Reflexion hervorgerufenen Lichtstrahlen R-1 und R-2 verlaufen annähernd parallel zueinander. Weil die Folie gekräuselt oder gewellt ist, kann es passieren, dass die Reflexionen R-1 und R-2 nicht exakt parallel zueinander verlaufen. Zwischen der Senkrechten Se und den beiden reflektierten Lichtstrahlen R-1 und R-2 tritt gemäß dem Reflexionsgesetz ebenfalls der Winkel α auf.

Die beiden Reflexionen R-1 und R-2 werden von dem Spiegel 3 und der Linse 4 auf den Zeilensensor 5 projiziert.

Die Photodetektoren des Zeilensensors 5 haben eine optische Achse, die parallel zur Linie oA in Fig. 1 verläuft. Der Spiegel 3, die Linse 4 und der Zeilensensor 5 sind so angeordnet, dass zwischen dieser optischen Achse oA und der Senkrechten Se ein Winkel β auftritt. In einer bevorzugten Ausgestaltung ist der Winkel β gleich dem Einfallswinkel α.

Jeder Photodetektor des Zeilensensors 5 misst, ob ein Lichtstrahl auf ihn auftrifft oder nicht. Im Beispiel von Fig. 1 treffen Lichtstrahlen auf zwei Photodetektoren PD1, PD2, zwischen denen zwei Photodetektoren liegen, auf die kein Lichtstrahl auftrifft. Jeder Photodetektor sendet ein Ausgangssignal aus. Dieses Ausgangssignal hängt davon ab, ob ein Lichtstrahl auftrifft oder nicht.

Die Auswerteeinrichtung 6 prüft, ob die Reflexion in nur einem Gebiet oder in mindestens zwei räumlich voneinander getrennten Gebieten auf den Zeilensensor 5 trifft. Ein Schwellwert wird vorgegeben. Die Auswerteeinrichtung 6 prüft, welche Photodetektoren des Zeilensensors 5 als Ausgangssignal ein elektrisches Signal liefert, welches oberhalb des Schwellwerts liegt. Auf diese Photodetektoren ist eine Reflexion des Lichtstrahls LS gefallen. Diese Reflexion wurde
- entweder vom Inhalt I der Postsendung Ps,
- vom Umschlag der Postsendung Ps,
- von der Folie Fo im Sichtfenster der Postsendung Ps (falls ein Sichtfenster mit Folie vorhanden ist) oder
- von einer Folie, die die Postsendung umhüllt, hervorgerufen.

Im Ausführungsbeispiel wird eine der beiden Ausführungsformen, die im Folgenden beschrieben werden, durchgeführt. Zunächst wird die Auswertung beschrieben, die zu einem einzigen Zeitpunkt t durchgeführt wird. Zu diesem Zeitpunkt trifft der Lichtstrahl LS - im Beispiel der Fig. 1 - im Auftreffenspunkt AP auf den Inhalt I der Postsendung Ps und außerdem auf die Folie Fo im Sichtfenster.

In der ersten Ausführungsform wird der Lichtstrahl LS dergestalt gebündelt, dass die Reflexion R-2 des Lichtstrahls LS, die der Inhalt I bewirkt, auf höchstens einen Photodetektor trifft. Dies wird dadurch bewirkt, dass der Lichtstrahl so gebündelt wird, dass sein Durchmesser kleiner als der Durchmesser jedes Photodetektors ist. Die Auswerteeinrichtung 6 prüft, ob zum Zeitpunkt t die gesamte Reflexion des Lichtstrahls LS auf einen einzigen Photodetektor oder auf mehrere Photodetektoren fällt. Fällt die Reflexion des Lichtstrahls LS auf einen einzigen Photodetektor, so traf der Lichtstrahl LS zum Zeitpunkt t ausschließlich auf den Inhalt I der Postsendung Ps. Die Postsendung Ps weist also keine Folie auf - oder wenigstens keine Folie, auf die zum Zeitpunkt t der Lichtstrahl LS fällt. Fällt die Reflexion des Lichtstrahls LS hingegen auf mehrere Photodetektoren, so traf der Lichtstrahl LS zum Zeitpunkt t sowohl auf den Inhalt I als auch auf eine Folie.

In der zweiten Ausführungsform wird der Lichtstrahl LS weniger stark gebündelt, oder die Photodetektoren haben eine geringere Ausdehnung senkrecht zur Richtung des einfallenden Lichts. Die Auswerteeinrichtung 6 prüft, ob zum Zeitpunkt t die gesamte Reflexion des Lichtstrahls LS auf ein zusammenhängendes Gebiet von Photodetektoren fällt oder ob die Reflexion auf zwei verschiedene, nicht zusammenhängende Gebiete von Photodetektoren fällt, die durch Photodetektoren getrennt werden, auf die kein reflektiertes Licht fällt. Fällt die Reflexion des Lichtstrahls LS auf ein einziges zusammenhängendes Gebiet von Photodetektoren, so traf der Lichtstrahl LS zum Zeitpunkt t ausschließlich auf den Inhalt I der Postsendung Ps. Die Postsendung Ps weist also keine Folie auf - oder wenigstens keine Folie, auf die zum Zeitpunkt t der Lichtstrahl LS fällt. Fällt die Reflexion des Lichtstrahls LS zum Zeitpunkt t hingegen auf zwei verschiedene Gebiete von Photodetektoren, so traf der Lichtstrahl LS zum Zeitpunkt t sowohl auf den Inhalt I als auch auf eine Folie Fo.

Im Beispiel der Fig. 1 ermittelt die Auswerteeinrichtung 6, dass der Lichtstrahl LS sowohl auf den Inhalt I als auch auf eine Folie traf, denn die Reflexion fällt auf mindestens zwei verschiedene Photodetektoren PD1, PD2. Zwischen diesen beiden Photodetektoren PD1, PD2 liegen zwei weitere Photodetektoren, auf die kein reflektierter Lichtstrahl fällt. PD1, PD2 gehören also zu zwei verschiedenen Gebieten von Photodetektoren.

Bislang wurde die Auswertung zu einem einzigen Zeitpunkt und für eine einzige Lichtquelle 2, die einen einzigen Lichtstrahl LS aussendet, beschrieben. Im Ausführungsbeispiel umfasst die Anordnung eine weitere Lichtquelle 2', die - gesehen in Transportrichtung T - oberhalb der Lichtquelle 2 angebracht ist. Auch die weitere Lichtquelle 2' sendet einen fokussierten Lichtstrahl LS' aus, der parallel zum Lichtstrahl LS verläuft.

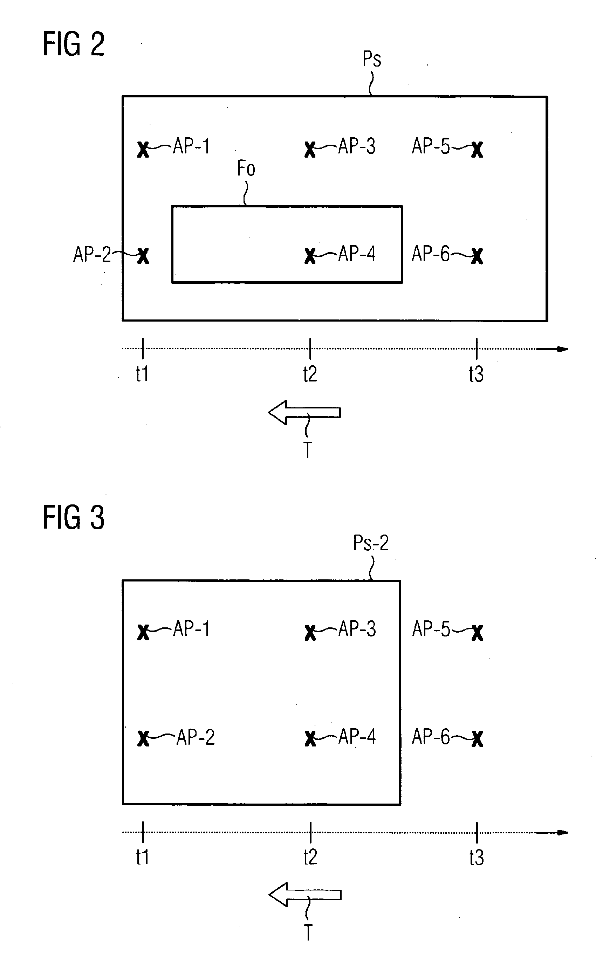

Fig. 2 und Fig. 3 zeigen beispielhaft das Auftreten der beiden Lichtstrahlen LS, LS' auf die Postsendung Ps von Fig. 1 mit Sichtfenster (Fig. 2) bzw. auf eine Postsendung Ps-2 ohne Sichtfenster (Fig. 3). In das Sichtfenster der Postsendung Ps ist die Folie Fo eingelassen. Die Postsendung Ps-2 weist keine Folie auf. Die Zeichenebenen von Fig. 2 und Fig. 3 stehen senkrecht auf der Transportrichtung T und senkrecht auf die Zeichenebene von Fig. 1.

Die Postsendungen Ps und Ps-2 werden nacheinander in die Transportrichtung T transportiert. Die Auswerteeinrichtung 6 wertet die Reflexionen der Lichtstrahlen 2 und 2' aus, die die jeweilige Postsendung zu den Auswerte-Zeitpunkten t1, t2 und t3 hervorruft. Der Lichtstrahl LS von der Lichtquelle 2 trifft zu den Auswerte-Zeitpunkten t1, t2 und t3 in den Auftreffenspunkten AP-2, AP-4 und AP-6 auf die jeweilige Postsendung auf. Der weitere Lichtstrahl LS' von der weiteren Lichtquelle 2' trifft zu den Auswerte-Zeitpunkten t1, t2 und t3 in den Auftreffpunkten AP-1, AP-3 und AP-5 auf die jeweilige Postsendung auf.

Die Auswerte-Zeitpunkte t1, t2 und t3 liegen um drei Zeitspannen T1, T2 bzw. T3 zeitlich hinter demjenigen Zeitpunkt, an dem die Vorderkante der jeweiligen Postsendung die Lichtschranke 10 passiert. Die Transportgeschwindigkeit ist konstant und bekannt. Der zeitliche Abstand zwischen t1 und t2 ist kleiner als die Zeitspanne, die die kürzeste Postsendung braucht, um einen Punkt der Transportstrecke zu passieren. Durch geeignete Wahl von T1, T2 und T3 wird gewährleistet, dass die Lichtstrahlen LS und LS' jeweils an wenigstens zwei Auswerte-Zeitpunkten t1, t2 auf eine Postsendung treffen.

Die Auswerteeinrichtung 6 ermittelt folgendes für die Postsendung Ps (vgl. Fig. 2): Die Reflexionen von den Punkten AP-1 AP-2, AP-3., AP-5 und AP-6 treffen nur auf einen einzigen Photodetektor (erste Ausführungsform) bzw. nur auf ein einziges zusammenhängendes Gebiet von Photodetektoren (zweite Ausführungsform). Die Reflexionen vom Punkt AP-4 treffen auf mehrere Photodetektoren (erste Ausführungsform) bzw. auf zwei getrennte Gebiete von Photodetektoren (zweite Ausführungsform).

Für die weitere Postsendung Ps-2 ermittelt die Auswerteeinrichtung 6 folgendes: Die Reflexionen von den Punkten AP-1, AP-2, AP-3 und AP-4 treffen nur auf einen einzigen Photodetektor (erste Ausführungsform) bzw. nur auf ein einziges zusammenhängendes Gebiet von Photodetektoren (zweite Ausführungsform). Die Reflexionen von den Punkten AP-5 und AP-6 treffen nicht auf einen Photodetektor des Zeilensensors 5 auf.

Die Auswerteeinrichtung 6 generiert wie folgt ein Ergebnis:
- Falls zu jedem Auswerte-Zeitpunkt die Reflexion jedes Lichtstrahls auf gar keinen Photodetektor oder auf einen einzigen Photodetektor (erste Ausführungsform) bzw. auf ein einziges zusammenhängendes Gebiet von Photodetektoren (zweite Ausführungsform) fällt, so weist die Postsendung kein Sichtfenster und keinen sonstigen Bereich mit Folie auf und ist auch nicht in eine Folie eingepackt.
- Falls zu jedem Auswerte-Zeitpunkt die Reflexion jedes Lichtstrahls auf mehrere Photodetektoren (erste Ausführungsform) bzw. auf mehrere zusammenhängende Gebiete von Photodetektoren (zweite Ausführungsform) fällt, so ist die Postsendung vollständig in eine Folie verpackt.
- Ansonsten weist die Postsendung einen Teilbereich mit einer Folie auf, ist aber nicht vollständig in eine Folie verpackt.

Im dritten Fall erkennt die Auswerteeinrichtung 6 folgende weitere Situationen:
- Falls bei der ersten Ausführungsform die Reflexionen eines Lichtstrahls auf nur einen einzigen Photodetektor fällt und zum selben Auswerte-Zeitpunkt die Reflexionen eines anderen Lichtstrahls auf mehrere Photodetektoren, so ist die Höhe der Folie - gesehen senkrecht zur Transportrichtung T - geringer als die Höhe der Postsendung.
- Falls bei der ersten Ausführungsform die Reflexionen eines Lichtstrahls zu einem Auswerte-Zeitpunkt auf nur einen einzigen Photodetektor fällt und zu einem anderen Auswerte-Zeitpunkt auf mehrere Photodetektoren, so ist die Länge der Folie - gesehen in Transportrichtung T - geringer als die Länge der Postsendung.
- Das entsprechende gilt für die zweite Ausführungsform.

Im Beispiel von Fig. 2 stellt die Auswerteeinrichtung 6 fest, dass die Postsendung Ps eine Folie Fo aufweist, die kürzer und weniger hoch als die Postsendung Ps ist, und dass Ps nicht in eine Folie eingepackt ist. Im Beispiel von Fig. 3 stellt die Auswerteeinrichtung 6 fest, dass die Postsendung Ps-2 weder eine Folie aufweist noch in eine Folie verpackt ist.

### Bezugszeichenliste

| *Bezugszeichen* | *Bedeutung* |
|---|---|
| 1 | Anordnung |
| 2 | Lichtquelle der Anordnung 1 |
| 3 | Spiegel der Anordnung 1 |
| 4 | Linse der Anordnung 1 |
| 5 | Zeile mit Photodetektoren der Anordnung 1 |
| 6 | Auswerteeinrichtung der Anordnung 1 |
| 10 | Lichtschranke |
| α | Einfallswinkel: Winkel zwischen dem Lichtstrahl LS und der Senkrechten Se |
| β | Winkel zwischen der optischen Achse oA und der Senkrechten Se |
| AP | Auftreffenspunkt, in dem der Lichtstrahl LS auf den Inhalt I der Postsendung Ps auftrifft |
| AP-1 | Auftreffenspunkt, in dem der Lichtstrahl LS' zum Zeitpunkt t1 auf die Postsendung Ps trifft |
| AP-2 | Auftreffenspunkt, in dem der Lichtstrahl LS zum Zeitpunkt t1 auf die Postsendung Ps trifft |
| AP-3 | Auftreffenspunkt, in dem der Lichtstrahl LS' zum Zeitpunkt t2 auf die Postsendung Ps trifft |
| AP-4 | Auftreffenspunkt, in dem der Lichtstrahl LS zum Zeitpunkt t2 auf die Postsendung Ps trifft |
| AP-5 | Auftreffenspunkt, in dem der Lichtstrahl LS' zum Zeitpunkt t3 auf die Postsendung Ps trifft |
| AP-6 | Auftreffenspunkt, in dem der Lichtstrahl LS zum Zeitpunkt t3 auf die Postsendung Ps trifft |
| Fo | Folie im Sichtfenster der Postsendung Ps |
| I | Inhalt der Postsendung Ps |
| PD-1, PD-2 | Photodetektoren des Zeilensensors 5, auf die Reflexion des Lichtstrahls LS auftrifft |
| Ps | zu untersuchende Postsendung, hat Sichtfenster mit Folie Fo |
| Ps | weitere zu untersuchende Postsendung, hat kein Sichtfenster und keine Folie |
| R-1 | Durch die Folie Fo im Sichtfenster hervorgerufene Reflexion des Lichtstrahls LS |
| R-2 | vom Inhalt I hervorgerufene Reflexion des Lichtstrahls LS |
| Se | Gedachte Senkrechte auf die Oberfläche der Postsendung Ps im Auftreffenspunkt des Lichtstrahls LS |
| T | Transportrichtung, in der die Postsendung Ps transportiert wird |
| T1, t2, t3 | Auswerte-Zeitpunkte |
| U | Umschlag der Postsendung Ps |

## Patentansprüche

1. Verfahren zur automatischen Prüfung, ob ein Gegenstand (Ps, Ps-2) einen Teilbereich aufweist, der von einer Folie (Fo) bedeckt ist, oder nicht,
wobei
ein Lichtsensor (5) verwendet wird,
der Lichtsensor (5) mehrere Photodetektoren (PD-1, PD-2) umfasst und
das Verfahren die Schritte umfasst, dass
- ein gebündelter Lichtstrahl (LS) erzeugt und auf die Oberfläche des Gegenstands (Ps, Ps-2) gerichtet wird,
- die vom Gegenstand (Ps, Ps-2) bewirkte Reflexion (R-1, R-2) des Lichtstrahls (LS) auf den Lichtsensor (5) geführt wird,
- die Photodetektoren (PD-1, PD-2) des Lichtsensors (5) abhängig von auftreffendem Licht Ausgangssignale generieren,
- die Ausgangssignale ausgewertet werden,
wobei der Lichtstrahl (LS) dergestalt auf den Gegenstand (Ps, Ps-2) gerichtet wird, dass
ein Winkel (α) größer Null zwischen dem Lichtstrahl (LS) und einer Senkrechten (Se) auf der Oberfläche des Gegenstands (Ps, Ps-2) in dem Punkt (AP), in dem der Lichtstrahl (LS) die Oberfläche des Gegenstands (Ps, Ps-2) trifft, auftritt,
**dadurch gekennzeichnet, dass**
die Auswertung der Ausgangssignale die Schritte umfasst, dass
- geprüft wird, ob die Reflexion (R-1, R-2) in nur einem Gebiet oder in mindestens zwei räumlich voneinander getrennten Gebieten (PD-1, PD-2) auf den Lichtsensor (5) trifft, und
- dann, wenn die Reflexion (R-1, R-2) in zwei getrennten Gebieten (PD-1, PD-2) auf den Lichtsensor (5)trifft,
entschieden wird, dass der Gegenstand (Ps, Ps-2) einen von einer Folie (Fo) bedeckten Teilbereich aufweist.

2. Verfahren nach Anspruch 1,
**dadurch gekennzeichnet, dass**
als gebündelter Lichtstrahl (LS) ein Laserstrahl erzeugt wird.

3. Verfahren nach Anspruch 1 oder Anspruch 2,
**dadurch gekennzeichnet, dass**
der Lichtstrahl (LS) dergestalt auf den Gegenstand (Ps, Ps-2) gerichtet wird, dass
ein Winkel größer Null zwischen dem Lichtstrahl (LS) und der jeweiligen optischen Achse (oA) jedes Photodetektors (PD-1, PD-2) auftritt.

4. Verfahren nach Anspruch 3,
**dadurch gekennzeichnet, dass**
der Lichtstrahl (LS) dergestalt auf den Gegenstand (Ps, Ps-2) gerichtet wird, dass
die Senkrechte (Se) den jeweiligen Winkel zwischen dem Lichtstrahl (LS) und der jeweiligen optischen Achse (oA) jedes Photodetektors (PD-1, PD-2) halbiert.

5. Verfahren nach einem der Ansprüche 1 bis 4,
**dadurch gekennzeichnet, dass**
der Lichtstrahl (LS) dergestalt auf den Gegenstand (Ps, Ps-2) gerichtet wird,
dass der Winkel zwischen dem Lichtstrahl (LS) und der Senkrechten (Se) größer als 5 Grad ist.

6. Verfahren nach Anspruch 6,
**dadurch gekennzeichnet, dass**
der Winkel zwischen dem Lichtstrahl (LS) und der Senkrechten (Se) zwischen 20 Grad und 40 Grad liegt.

7. Verfahren nach einem der Ansprüche 1 bis 6,
**dadurch gekennzeichnet, dass**
die Reflexion (R-1, R-2) **dadurch** auf den Lichtsensor (5) geführt wird, dass der Lichtstrahl (LS) dergestalt auf den Gegenstand (Ps, Ps-2) gerichtet wird,
dass der reflektierte Lichtstrahl auf den Lichtsensor (5) trifft.

8. Verfahren nach einem der Ansprüche 1 bis 7,
**dadurch gekennzeichnet, dass**
die Reflexion (R-1, R-2) mit Hilfe eines optischen Systems, das eine Linse (4) oder einen Spiegel (3) umfasst,
auf den Lichtsensor (5) geführt wird.

9. Verfahren nach einem der Ansprüche 1 bis 8,
**dadurch gekennzeichnet, dass**
der Lichtstrahl (LS) dergestalt gebündelt wird, dass die vom Gegenstand (Ps, Ps-2) bewirkte Reflexion (R-1, R-2) dann auf nur einen einzigen Photodetektor (PD-1, PD-2) auftrifft, wenn der Gegenstand (Ps, Ps-2) keinen Teilbereich mit Folie (Fo) aufweist, und
dann, wenn die Reflexion (R-1, R-2) auf zwei verschiedene Photodetektoren (PD-1, PD-2) auftrifft, entschieden wird, dass der Gegenstand (Ps, Ps-2) einen von einer Folie (Fo) bedeckten Teilbereich aufweist.

10. Verfahren nach einem der Ansprüche 1 bis 9,
**dadurch gekennzeichnet, dass**
- das Richten des Lichtstrahls (LS) auf den Gegenstand (Ps, Ps-2) an einem ersten Zeitpunkt (t1) durchgeführt und an mindestens einem zweiten Zeitpunkt (t2, t3) wiederholt wird,
- wobei der Gegenstand (Ps, Ps-2) dergestalt bewegt wird,
dass er zum ersten Zeitpunkt (t1) eine andere Position relativ zum Lichtsensor (5) als zum zweiten Zeitpunkt (t2, t3) hat,
- geprüft wird,
ob die Reflexion (R-1, R-2) an dem ersten Zeitpunkt (t1) in einem Gebiet oder in zwei getrennten Gebieten auf den Lichtsensor (5) trifft,
- geprüft wird,
ob die Reflexion (R-1, R-2) an dem zweiten Zeitpunkt (t2, t3) in einem Gebiet oder in zwei getrennten Gebieten auf den Lichtsensor (5) trifft, und
- dann, wenn die Reflexion (R-1, R-2) an mindestens einem Zeitpunkt (t1, t2, t3) in zwei getrennten Gebieten auf den Lichtsensor (5) trifft, entschieden wird, dass der Gegenstand (Ps, Ps-2) einen von einer Folie (Fo) bedeckten Teilbereich aufweist.

11. Verfahren nach Anspruch 10,
**dadurch gekennzeichnet, dass**
dann, wenn die Reflexion (R-1, R-2) an beiden Zeitpunkten (t1, t2, t3) in zwei getrennten Gebieten auftrifft, entschieden wird, dass der Gegenstand (Ps, Ps-2) von einer Folie (Fo) umgeben ist.

12. Verfahren nach Anspruch 10 oder Anspruch 11,
**dadurch gekennzeichnet, dass**
- die Strecke, die der Gegenstand (Ps, Ps-2) zwischen dem ersten Zeitpunkt (t1) und dem mindestens einen zweiten Zeitpunkt (t2, t3) relativ zum Lichtsensor (5) zurückgelegt hat, ermittelt wird und
- dann, wenn die Reflexion (R-1, R-2) an beiden Zeitpunkten (t1, t2, t3) in zwei getrennten Gebieten auftrifft,
- unter Verwendung der ermittelten Strecke eine untere Schranke für eine Abmessung des von der Folie (Fo) bedeckten Bereichs berechnet wird.

13. Verfahren nach einem der Ansprüche 1 bis 12,
**dadurch gekennzeichnet, dass**
- ein weiterer gebündelter Lichtstrahl erzeugt wird,
- wobei der weitere Lichtstrahl ebenfalls dergestalt auf den Gegenstand (Ps, Ps-2) gerichtet wird, dass ein Winkel größer Null zwischen dem weiteren Lichtstrahl und einer Senkrechten (Se) auf der Oberfläche des Gegenstands (Ps, Ps-2) in dem Punkt, in dem der weitere Lichtstrahl die Oberfläche des Gegenstands (Ps, Ps-2) trifft, auftritt,
- die vom Gegenstand (Ps, Ps-2) bewirkte weitere Reflexion (R-1, R-2) des weiteren Lichtstrahls ebenfalls auf den Lichtsensor (5) geführt wird,
- geprüft wird, ob die Reflexion (R-1, R-2) des weiteren Lichtstrahls in nur einem Gebiet oder in mindestens zwei räumlich voneinander getrennten Gebieten auf den Lichtsensor (5) trifft, und
- dann, wenn die Reflexion (R-1, R-2) des Lichtstrahls (LS) oder die Reflexion (R-1, R-2) des weiteren Lichtstrahls in zwei getrennten Gebieten auf den Lichtsensor (5) trifft,
entschieden wird, dass der Gegenstand (Ps, Ps-2) einen von einer Folie (Fo) bedeckten Teilbereich aufweist.

14. Verfahren nach Anspruch 13,
**dadurch gekennzeichnet, dass**
der weitere gebündelte Lichtstrahl dergestalt auf den Gegenstand (Ps, Ps-2) gerichtet wird,
dass er parallel zum Lichtstrahl (LS) verläuft.

15. Verfahren nach Anspruch 13 oder Anspruch 14,
**dadurch gekennzeichnet, dass**
der Lichtstrahl und der weitere Lichtstrahl zeitgleich auf den Gegenstand (Ps, Ps-2) gerichtet werden.

16. Verwendung eines Verfahrens nach einem der Ansprüche 1 bis 15
zur automatischen Prüfung, ob eine Postsendung ein Sichtfenster aufweist oder nicht.

17. Verwendung eines Verfahrens nach einem der Ansprüche 1 bis 15
zur automatischen Prüfung, ob eine Postsendung in eine Folie (Fo) verpackt ist oder nicht.

18. Prüfvorrichtung zur automatischen Prüfung, ob ein Gegenstand (Ps, Ps-2) einen Teilbereich aufweist, der von einer Folie (Fo) bedeckt ist, oder nicht, wobei die Prüfvorrichtung
- eine Lichtquelle,
- einen Lichtsensor (5) und
- eine Auswerteeinrichtung (6)
umfasst, wobei
- der Lichtsensor (5) mehrere Photodetektoren (PD-1, PD-2) umfasst und
- die Lichtquelle dazu ausgestaltet ist,
einen gebündelten Lichtstrahl zu erzeugen und dergestalt auf den Gegenstand (Ps, Ps-2) zu richten, dass ein Winkel (α) größer Null zwischen dem Lichtstrahl und einer Senkrechten (Se) auf der Oberfläche des Gegenstands (Ps, Ps-2) in dem Punkt, in dem der Lichtstrahl die Oberfläche des Gegenstands (Ps, Ps-2) trifft, auftritt
- die Prüfvorrichtung so ausgestaltet ist, dass die vom Gegenstand (Ps, Ps-2) bewirkte Reflexion (R-1, R-2) des Lichtstrahls (LS) auf den Lichtsensor (5) fällt,
- die Photodetektoren (PD-1, PD-2) des Lichtsensors (5) dazu ausgestaltet sind, abhängig von auftreffendem Licht Ausgangssignale zu generieren, und
- die Auswerteeinrichtung (6) dazu ausgestaltet ist,
die Ausgangssignale auszuwerten,
**dadurch gekennzeichnet, dass**
die Auswerteeinrichtung (6) dazu ausgestaltet ist,
- zu prüfen, ob die Reflexion (R-1, R-2) in nur einem Gebiet oder in mindestens zwei räumlich voneinander getrennten Gebieten auf den Lichtsensor (5) trifft, und
- dann, wenn die Reflexion (R-1, R-2) in zwei getrennten Gebieten auf den Lichtsensor (5) trifft,
zu entscheiden, dass der Gegenstand (Ps, Ps-2) einen von einer Folie (Fo) bedeckten Teilbereich aufweist.

19. Prüfvorrichtung nach Anspruch 18,
**dadurch gekennzeichnet, dass**
die Prüfvorrichtung eine Umlenkvorrichtung (3, 4) aufweist,
die dazu ausgestaltet ist,
den reflektierten Lichtstrahl (R-1, R-2) auf den Lichtsensor (5) zu führen.

20. Prüfvorrichtung nach Anspruch 18 oder Anspruch 19,
**dadurch gekennzeichnet, dass**
- die Prüfvorrichtung eine weitere Lichtquelle aufweist,
- die weitere Lichtquelle dazu ausgestaltet ist, einen weiteren gebündelten Lichtstrahl zu erzeugen und dergestalt auf den Gegenstand (Ps, Ps-2) zu richten, dass
einer Senkrechten (Se) auf der Oberfläche des Gegenstands (Ps, Ps-2) in dem Punkt, in dem der weitere Lichtstrahl die Oberfläche des Gegenstands (Ps, Ps-2) trifft, auftritt,
- die Prüfvorrichtung so ausgestaltet ist, dass die vom Gegenstand (Ps, Ps-2) bewirkte Reflexion (R-1, R-2) des weiteren Lichtstrahls auf den Lichtsensor (5) fällt, und
- die Auswerteeinrichtung (6) dazu ausgestaltet ist zu prüfen, ob die Reflexion (R-1, R-2) des weiteren Lichtstrahls in nur einem Gebiet oder in mindestens zwei räumlich voneinander getrennten Gebieten auf den Lichtsensor (5) trifft, und
dann, wenn die Reflexion (R-1, R-2) des Lichtstrahls (LS) oder die Reflexion des weiteren Lichtstrahls in zwei getrennten Gebieten auf den Lichtsensor (5) trifft,
zu entscheiden, dass der Gegenstand (Ps, Ps-2) einen von einer Folie (Fo) bedeckten Teilbereich aufweist.

## Claims

1. Method for automatically testing whether an object (Ps, Ps-2) has a subregion which is covered by a film (Fo), or not,
use being made of a light sensor (5),
the light sensor (5) comprising a plurality of photodetectors (PD-1, PD-2), and
the method comprising the steps of
- producing a focused light beam (LS) and directing it onto the surface of the object (Ps, Ps-2),
- guiding the reflection (R-1, R-2), effected by the object (Ps, Ps-2), of the light beam (LS) onto the light sensor (5),
- using the photodetectors (PD-1, PD-2) of the light sensor (5) to generate output signals as a function of the impinging light, and
- evaluating the output signals,
the light beam (LS) being directed onto the object (Ps, Ps-2) in such a way that
an angle (α) of greater than zero occurs between the light beam (LS) and a perpendicular (Se) to the surface of the object (Ps, Ps-2) at the point (AP) where the light beam (LS) strikes the surface of the object (Ps, Ps-2), **characterized in that**
evaluation of the output signals comprises the steps of
- testing whether the reflection (R-1, R-2) strikes the light sensor (5) in only one zone or in at least two zones (PD-1, PD-2) spatially separated from one another, and
- making a decision, whenever the reflection (R-1, R-2) strikes the light sensor (5) in two separate zones (PD-1, PD-2), that the object (Ps, Ps-2) has a subregion covered by a film (Fo).

2. Method according to Claim 1,
**characterized in that**
a laser beam is produced as focused light beam (LS).

3. Method according to Claim 1 or Claim 2,
**characterized in that**
the light beam (LS) is directed onto the object (Ps, Ps-2) in such a way that
an angle of greater than zero occurs between the light beam (LS) and the respective optical axis (oA) of each photodetector (PD-1, PD-2).

4. Method according to Claim 3,
**characterized in that**
the light beam (LS) is directed onto the object (Ps, Ps-2) in such a way that
the perpendicular (Se) bisects the respective angle between the light beam (LS) and the respective optical axis (oA) of each photodetector (PD-1, PD-2).

5. Method according to one of Claims 1 to 4,
**characterized in that**
the light beam (LS) is directed onto the object (Ps, Ps-2) in such a way that
the angle between the light beam (LS) and the perpendicular (Se) is greater than 5 degrees.

6. Method according to Claim 5,
**characterized in that**
the angle between the light beam (LS) and the perpendicular (Se) lies between 20 degrees and 40 degrees.

7. Method according to one of Claims 1 to 6,
**characterized in that**
the reflection (R-1, R-2) is guided onto the light sensor (5) by directing the light beam (LS) onto the object (Ps, Ps-2) in such a way
that the reflected light beam strikes the light sensor (5).

8. Method according to one of Claims 1 to 7,
**characterized in that**
the reflection (R-1, R-2) is guided onto the light sensor (5) with the aid of an optical system which comprises a lens (4) or a mirror (3).

9. Method according to one of Claims 1 to 8,
**characterized in that**
the light beam (LS) is focused in such a way that the reflection (R-1 R-2) effected by the object (Ps, Ps-2) impinges on only a single photodetector (PD-1, PD-2) whenever the object (Ps, Ps-2) has no subregion with film (Fo), and
the decision is made that the object (Ps, Ps-2) has a subregion covered by a film (Fo) whenever the reflection (R-1 R-2) impinges on two different photodetectors (PD-1, PD-2).

10. Method according to one of Claims 1 to 9,
**characterized in that**
- the light beam (LS) is directed onto the object (Ps, Ps-2) at a first instance (t1), the procedure being repeated at at least a second instant (t2, t3),
- the object (Ps, Ps-2) being moved in such a way that it has a different position relative to the light sensor (5) at the first instant (t1) than it has at the second instant (t2, t3),
- it is tested whether at the first instant (t1) the reflection (R-1, R-2) strikes the light sensor (5) in one zone or two separate zones,
- it is tested whether at the second instant (t2, t3) the reflection (R-1, R-2) strikes the light sensor (5) in one zone or two separate zones, and
- a decision is made whenever the reflection (R-1, R-2) strikes the light sensor (5) in two separate zones at at least one instant (t1, t2, t3) that the object (Ps, Ps-2) has a subregion covered by a film (Fo).

11. Method according to Claim 10,
**characterized in that**
a decision is made whenever the reflection (R-1, R-2) impinges in two separate zones at both instants (t1, t2, t3) that the object (Ps, Ps-2) is surrounded by a film (Fo).

12. Method according to Claim 10 or Claim 11,
**characterized in that**
- the distance which the object (Ps, Ps-2) has covered between the first instant (t1) and the at least one second instant (t2, t3) relative to the light sensor (5) is determined, and
- whenever the reflection (R-1, R-2) occurs in two separate zones at both instants (t1, t2, t3),
- the determined distance is used to calculate a lower bound for a dimension of the region covered by the film (Fo).

13. Method according to one of Claims 1 to 12,
**characterized in that**
- a further focused light beam is produced,
- the further light beam likewise being directed onto the object (Ps, Ps-2) in such a way that an angle of greater than zero occurs between the further light beam and a perpendicular (Se) to the surface of the object (Ps, Ps-2) at the point where the further light beam strikes the surface of the object (Ps, Ps-2),
- the further reflection(R-1, R-2), effected by the object (Ps, Ps-2), of the further light beam is likewise guided onto the light sensor (5),
- it is tested is whether the reflection (R-1, R-2) strikes the light sensor (5) in only one zone or in at least two zones spatially separated from one another, and
- a decision is made, whenever the reflection (R-1, R-2) of the light beam (LS), or the reflection (R-1, R-2) of the further light beam strikes the light sensor (5) in two separate zones, that the object (Ps, Ps-2) has a subregion covered by a film (Fo).

14. Method according to Claim 13,
**characterized in that**
the further focused light beam is directed onto the object (Ps, Ps-2) in such a way that it runs parallel to the light beam (LS).

15. Method according to Claim 13 or Claim 14,
**characterized in that**
the light beam and the further light beam are simultaneously directed onto the object (Ps, Ps-2).

16. Use of a method according to one of Claims 1 to 15 for automatically testing whether a mail item has a viewing window or not.

17. Use of a method according to one of Claims 1 to 15 for automatically testing whether a mail item is packed in a film (Fo) or not.

18. Test device for automatically testing whether an object (Ps, Ps-2) has a subregion which is covered by a film (Fo) or not, the test device comprising
- a light source,
- a light sensor (5), and
- an evaluation device (6),
- the light sensor (5) comprising a plurality of photodetectors (PD-1, PD-2), and
- the light source being designed to produce a focused light beam and to direct it onto the object (Ps, Ps-2) in such a way that an angle (α) of greater than zero occurs between the light beam and a perpendicular (Se) to the surface of the object (Ps, Ps-2) at the point where the light beam strikes the surface of the object (Ps, Ps-2),
- the test device being designed such that the reflection (R-1, R-2), effected by the object (Ps, Ps-2), of the light beam (LS) falls onto the light sensor (5),
- the photodetectors (PD-1, PD-2) of the light sensor (5) being designed to generate output signals as a function of impinging light, and
- the evaluation device (6) being designed to evaluate the output signals,
**characterized in that**
the evaluation device (6) is designed
- to test whether the reflection (R-1, R-2) strikes the light sensor (5) in only one zone or in at least two zones spatially separated from one another, and
- to make a decision, whenever the reflection (R-1, R-2) strikes the light sensor (5) in two separate zones, that the object (Ps, Ps-2) has a subregion covered by a film (Fo).

19. Test device according to Claim 18,
**characterized in that**
the test device has a deflecting device (3, 4) which is designed to guide the reflected light beam (R-1, R-2) onto the light sensor (5).

20. Test device according to Claim 18 or Claim 19,
**characterized in that**
- the test device has a further light source,
- the further light source is designed to produce a further focused light beam and to direct it onto the object (Ps, Ps-2) in such a way that a perpendicular (Se) to the surface of the object (Ps, Ps-2) occurs at the point where the further light beam strikes the surface of the object (Ps, Ps-2),
- the test device is designed such that the reflection (R-1, R-2), effected by the object (Ps, Ps-2), of the further light beam falls onto the light sensor (5), and
- the evaluation device (6) is designed to test whether the reflection (R-1, R-2) of the further light beam strikes the light sensor (5) in only one zone or in at least two zones spatially separated from one another, and
to make a decision, whenever the reflection (R-1, R-2) of the light beam (LS), or the reflection of the further light beam strikes the light sensor (5) in two separate zones, that the object (Ps, Ps-2) has a subregion covered by a film (Fo).

## Revendications

1. Procédé pour contrôler automatiquement si un objet ( Ps, Ps-2 ) a une zone partielle qui est recouverte d'une feuille ( Fo ) ou n'en a pas,
dans lequel
on utilise un capteur ( 5 ) de lumière,
le capteur ( 5 ) de lumière comprend plusieurs photodétecteurs ( PD-1, PD-2 ) et
le procédé comprend les stades, dans lesquels
- on produit un faisceau ( LS ) lumineux focalisé et on le dirige sur la surface de l'objet ( Ps, Ps-2 ),
- on envoie sur le capteur ( 5 ) de lumière la réflexion ( R-1, R-2 ) du faisceau ( LS ) lumineux provoquée par l'objet ( Ps, Ps-2 ),
- les photodétecteurs ( PD-1, PD-2 ) du capteur ( 5 ) de lumière produisent des signaux de sortie en fonction de la lumière incidente,
- on exploite les signaux de sortie,
on dirige le faisceau ( LS ) lumineux sur l'objet ( Ps, Ps-2 ) de manière à produire un angle ( α ) plus grand que zéro entre le faisceau ( LS ) lumineux et une perpendiculaire ( Se ) à la surface de l'objet ( Ps, Ps-2 ) au point ( AP ) où le faisceau ( LS ) lumineux atteint la surface de l'objet ( Ps, Ps-2 ),
**caractérisé en ce que**
l'exploitation des signaux de sortie comprend les stades, dans lesquels
- on contrôle si la réflexion ( R-1, R-2 ) se produit dans seulement une zone ou dans au moins deux zones ( PD-1, PD-2 ) séparées l'une de l'autre dans l'espace sur le capteur ( 5 ) de lumière, et
- lorsque la réflexion ( R-1, R-2 ) se produit dans deux zones ( PD-1, PD-2 ) séparées sur le capteur ( 5 ) de lumière, on décide que l'objet ( Ps, Ps-2 ) a une zone partielle recouverte d'une feuille ( Fo ).

2. Procédé suivant la revendication 1,
**caractérisé en ce que**
on produit un faisceau laser comme faisceau ( LS ) lumineux focalisé.

3. Procédé suivant la revendication 1 ou la revendication 2,
**caractérisé en ce que**
on dirige le faisceau ( LS ) lumineux sur l'objet ( Ps, Ps-2 ), de manière à
produire un angle plus grand que zéro entre le faisceau ( LS ) lumineux et l'axe ( oA ) optique respectif de chaque photodétecteur ( PD-1, PD-2 ).

4. Procédé suivant la revendication 3,
**caractérisé en ce que**
on dirige le faisceau ( LS ) lumineux sur l'objet ( Ps, Ps-2 ), de manière à ce que
la perpendiculaire ( Se ) divise par deux l'angle respectif entre le faisceau ( LS ) lumineux et l'axe ( oA ) optique respectif de chaque photodétecteur ( PD-1, PD-2 ).

5. Procédé suivant l'une des revendications 1 à 4,
**caractérisé en ce que**
on dirige le faisceau ( LS ) lumineux sur l'objet ( Ps, Ps-2 ),
de manière à ce que l'angle entre le faisceau ( LS ) lumineux et la perpendiculaire ( Se ) soit plus grand que 5 degrés.

6. Procédé suivant la revendication 5,
**caractérisé en ce que**
l'angle entre le faisceau ( LS ) lumineux et la perpendiculaire ( Se ) est compris entre 20 degrés et 40 degrés.

7. Procédé suivant l'une des revendications 1 à 6,
**caractérisé en ce que**
on envoie la réflexion ( R-1, R-2 ) sur le capteur ( 5 ) de lumière, de manière à ce que le faisceau ( LS ) lumineux soit dirigé sur l'objet ( Ps, Ps-2 ) en sorte que le faisceau lumineux réfléchi arrive sur le capteur ( 5 ) lumineux.

8. Procédé suivant l'une des revendications 1 à 7,
**caractérisé en ce que**
on envoie la réflexion ( R-1, R-2 ) sur le capteur ( 5 ) de lumière à l'aide d'un système optique, qui comprend une lentille ( 4 ) ou un miroir ( 3 ).

9. Procédé suivant l'une des revendications 1 à 8,
**caractérisé en ce que**
on focalise le faisceau ( LS ) lumineux, de manière à ce que la réflexion ( R-1, R-2 ) provoquée par l'objet ( Ps, Ps-2 ) arrive sur seulement un seul photodétecteur ( PD-1, PD-2 ) lorsque l'objet ( Ps, Ps-2 ) n'a pas de zone partielle ayant une feuille ( Fo ), et
lorsque la réflexion ( R-1, R-2 ) arrive sur deux photodétecteurs ( PD-1, PD-2 ) différents, on décide que l'objet ( Ps, Ps-2 ) a une zone partielle recouverte d'une feuille ( Fo ).

10. Procédé suivant l'une des revendications 1 à 9,
**caractérisé en ce que**
- on dirige le faisceau ( LS ) lumineux sur l'objet ( Ps, Ps-2 ) à un premier instant ( t1 ) et on répète l'opération au moins à un deuxième instant ( t2, t3 ),
- on déplace l'objet ( Ps, Ps-2 ), de manière à ce que il ait au premier instant ( t1 ) une position autre par rapport au capteur ( 5 ) de lumière qu'au deuxième instant ( t2, t3 ),
- on contrôle
si la réflexion ( R-1, R-2 ) au premier instant( t1 ) arrive dans un zone ou dans deux zones séparées sur le capteur ( 5 ) de lumière,
- on contrôle
si la réflexion ( R-1, R-2 ) au deuxième instant ( t2, t3 ) arrive dans une zone ou dans deux zones distinctes sur le capteur ( 5 ) de lumière, et
- lorsque la réflexion ( R-1, R-2 ) arrive à au moins un instant ( t1, t2, t3 ) dans deux zones distinctes sur le capteur ( 5 ) de lumière,
on décide que l'objet ( Ps, Ps-2 ) a une zone partielle recouverte d'une feuille ( Fo ).

11. Procédé suivant la revendication 10,
**caractérisé en ce que**
lorsque la réflexion ( R-1, R-2 ) arrive aux deux instants ( t1, t2, t3 ) dans deux zones distinctes, on décide que l'objet ( Ps, Ps-2 ) est entouré d'une feuille ( Fo ).

12. Procédé suivant la revendication 10 ou la revendication 11,
**caractérisé en ce que**
- on détermine la distance que l'objet ( Ps, Ps-2 ) a parcouru par rapport au capteur ( 5 ) de lumière entre le premier instant ( t1 ) et le au moins un deuxième instant ( t2, t3 ) et
- lorsque la réflexion ( R-1, R-2 ) arrive aux deux instants ( t1, t2, t3 ) dans deux zones distinctes,
- on calcule en utilisant la distance déterminée une limite inférieure pour une dimension de la zone recouverte par la feuille ( Fo ).

13. Procédé suivant l'une des revendications 1 à 12,
**caractérisé en ce que**
- on produit un autre faisceau lumineux focalisé,
- on dirige l'autre faisceau lumineux également sur l'objet ( Ps, Ps-2 ), de manière à produire un angle différent de zéro entre l'autre faisceau lumineux et une perpendiculaire ( Se ) à la surface de l'objet ( Ps, Ps-2 ) au point où l'autre faisceau lumineux atteint la surface de l'objet ( Ps, Ps-2 ),
- on envoie l'autre réflexion ( R-1, R-2 ) de l'autre faisceau lumineux provoquée par l'objet ( Ps, Ps-2 ) également sur le capteur ( 5 ) de lumière,
- on contrôle si la réflexion ( R-1, R-2 ) de l'autre faisceau lumineux arrive dans seulement une zone ou dans au moins deux zones distinctes l'une de l'autre dans l'espace sur le capteur ( 5 ) de lumière, et
- lorsque la réflexion ( R-1, R-2 ) du faisceau ( LS ) lumineux ou la réflexion ( R-1, R-2 ) de l'autre faisceau lumineux arrive dans deux zones distinctes sur le capteur ( 5 ) de lumière,
on décide que l'objet ( Ps, Ps-2 ) a une zone partielle recouverte d'une feuille ( Fo ).

14. Procédé suivant la revendication 13,
**caractérisé en ce que**
l'autre faisceau lumineux focalisé est dirigé sur l'objet ( Ps, Ps-2 ), de manière à être parallèle au faisceau ( LS ) lumineux.

15. Procédé suivant la revendication 13 ou la revendication 14,
**caractérisé en ce que**
l'on dirige en même temps le faisceau lumineux et l'autre faisceau lumineux sur l'objet ( Ps, Ps-2 ).

16. Utilisation d'un procédé suivant l'une des revendications 1 à 15,
pour contrôler automatiquement si un envoi postal a une fenêtre ou n'en a pas.

17. Utilisation d'un procédé suivant l'une des revendications 1 à 15,
pour contrôler automatique si un envoi postal est emballé dans une feuille ( Fo ) ou ne l'est pas.

18. Dispositif pour contrôler automatiquement si un objet ( Ps, Ps-2 ) a une zone partielle qui est recouverte d'une feuille ( Fo ) ou n'en a pas, dans lequel le dispositif de contrôle comprend
- une source lumineuse,
- un capteur ( 5 ) de lumière et
- un dispositif ( 6 ) d'exploitation
dans lequel
- le capteur ( 5 ) de lumière comprend plusieurs photodétecteurs ( PD-1, PD-2 ) et
- la source lumineuse est conformée
pour produire un faisceau lumineux focalisé et le diriger sur l'objet ( Ps, Ps-2 ) de manière à donner un angle ( α ) plus grand que zéro entre le faisceau ( LS ) lumineux et une perpendiculaire ( Se ) à la surface de l'objet ( Ps, Ps-2 ) au point où le faisceau lumineux atteint la surface de l'objet ( Ps, Ps-2 ),
- le dispositif de contrôle est conformée de manière à ce que la réflexion ( R-1, R-2 ) du faisceau ( LS ) lumineux provoquée par l'objet ( Ps, Ps-2 ) arrive sur le capteur ( 5 ) de lumière,
- les photodétecteurs ( PD-1, PD-2 ) du capteur ( 5 ) de lumière sont conformés pour produire des signaux de sortie en fonction de la lumière incidente, et
- le dispositif ( 6 ) d'exploitation est conformée pour
exploiter les signaux de sortie,
**caractérisé en ce que**
le dispositif ( 6 ) d'exploitation est conformé
- pour contrôler si la réflexion ( R-1, R-2 ) n'arrive sur le capteur ( 5 ) de lumière que dans une zone ou dans au moins deux zones distinctes l'une de l'autre dans l'espace, et
- lorsque la réflexion ( R-1, R-2 ) arrive dans deux zones distinctes sur le capteur ( 5 ) de lumière,
pour décider que l'objet ( Ps, Ps-2 ) a une zone partielle recouverte d'une feuille ( Fo ).

19. Dispositif de contrôle suivant la revendication 18,
**caractérisé en ce que**
le dispositif de contrôle a un dispositif ( 3, 4 ) de déviation,
qui est conformé
pour guider le faisceau ( R-1, R-2 ) lumineux réfléchi sur le capteur ( 5 ) de lumière.

20. Dispositif de contrôle suivant la revendication 18 ou la revendication 19,
**caractérisé en ce que**
- le dispositif de contrôle a une autre source lumineuse,
- l'autre source lumineuse est conformée pour produire un autre faisceau lumineux focalisé et le diriger sur l'objet ( Ps, Ps-2 ),
de façon à produire une perpendiculaire ( Se ) à la surface de l'objet ( Ps, Ps-2 ) au point où l'autre faisceau lumineux arrive sur la surface de l'objet ( Ps, Ps-2 ),
- le dispositif de contrôle est conformé de manière à ce que la réflexion ( R-1, R-2 ) de l'autre faisceau lumineux projetée par l'objet ( Ps, Ps-2 ) arrive sur le capteur ( 5 ) de lumière,
- le dispositif ( 6 ) d'exploitation est conformé pour contrôler si la réflexion ( R-1, R-2 ) de l'autre faisceau lumineux n'arrive que dans une zone ou dans au moins deux zones distinctes l'une de l'autre dans l'espace sur le capteur ( 5 ) de lumière, et
lorsque la réflexion ( R-1, R-2 ) du faisceau ( LS ) lumineux ou la réflexion de l'autre faisceau lumineux arrive dans deux zones distinctes sur le capteur ( 5 ) de lumière,
pour décider que l'objet ( Ps, Ps-2 ) a une zone partielle recouverte d'une feuille ( Fo ).
